# EUROPÄISCHE PATENTSCHRIFT

(11) **EP 4 200 962 B1**
(45) Veröffentlichungstag und Bekanntmachung des Hinweises auf die Patenterteilung: **19.03.2025**
(21) Anmeldenummer: 22733459.6
(22) Anmeldetag: 17.06.2022
(51) Int. Cl.: H02K 41/03, B25J 9/12, B25J 21/00, B65G 54/02

(54) **VORRICHTUNG ZUR MANIPULATION EINES GEGENSTANDES, VERFAHREN ZUR BEFÜLLUNG EINES GEGENSTANDES UND KORRESPONDIERENDE VERWENDUNG**
DEVICE FOR MANIPULATING AN OBJECT, METHOD FOR FILLING AN OBJECT AND CORRESPONDING USE
DISPOSITIF DE MANIPULATION D'UN OBJET, PROCÉDÉ DE REMPLISSAGE D'UN OBJET ET UTILISATION CORRESPONDANTE

(30) Priorität: 18.06.2021 EP 21180412
(43) Veröffentlichungstag der Anmeldung: 28.06.2023
(73) Patentinhaber: TT Innovation AG, 6300 Zug (CH)
(72) Erfinder: TONDERA, Marc, 4125 Riehen (CH); SCHNEIDLER, Tobias Jan, 6332 Hagendorn (CH); CARLI, Julia Annette, 4053 Basel (CH); MÜLLER, Mathieu, 68510 Sierentz (FR); LEUENBERGER, Philipp, 4052 Basel (CH); RETHORET, Christophe, 68500 Issenheim (FR); ZELLER, Mike, 4246 Wahlen (CH)
(74) Vertreter: Mertzlufft-Paufler, Cornelius
(86) Internationale Anmeldenummer: PCT/EP2022/066602
(87) Internationale Veröffentlichungsnummer: WO 2022/263651

(56) Entgegenhaltungen:
- EP-A1- 3 945 046
- EP-A1- 4 338 261
- WO-A1-2022/238429
- DE-A1- 102019 215 745
- JP-A- H01 116 065
- US-A1- 2020 262 060
- LILIENTHAL PETER F II ET AL: "A FLEXIBLE MANUFACTURING WORKSTATION", AT & T TECHNICAL JOURNAL, AMERICAN TELEPHONE AND TELEGRAPH CO. NEW YORK, US, vol. 67, no. 2, 1 April 1988 (1988-04-01), pages 5 - 14, XP000098253, ISSN: 8756-2324

## Beschreibung

Die Erfindung betrifft eine Vorrichtung zur Manipulation eines Gegenstandes wobei der Gegenstand von wenigstens einem Mover, der magnetisch an einer Stator-Anordnung angekoppelt ist, berührungslos auf einer Antriebsfläche bewegbar ist.

Es ist üblich, spezielle Fertigungsverfahren, die eine kontrollierte und/oder sterile Umgebung benötigen, in geschützten Innenräumen durchzuführen. Solche geschützten Innenräume sind unter anderem Reinräume, wie beispielsweise Isolatoren, Containments oder radioaktiv belastete Räume. Geschützte Innenräume finden vielseitig Verwendung unter anderem bei der Herstellung von Halbleitern, in der Luft- und Raumfahrttechnik sowie bei der aseptischen Produktion oder Verpackung von Lebensmitteln und pharmazeutischen oder kosmetischen Erzeugnissen. Halb- oder vollautomatisierte Prozessschritte werden weitestgehend zur Optimierung der speziellen Fertigungsverfahren verwendet. Jedoch werden häufig verschiedenste Verfahrensschritte durch Menschenhand getätigt, was zu Kontaminationen der zu fertigenden Produkte führen kann, auch wenn das Verfahren innerhalb eines geschützten Innenraums durchgeführt wird.

Vorrichtungen zur Manipulation von Gegenständen in der Industrie sind bekannt. Als Manipulation kann hierbei beispielsweise jeder Prozess angesehen werden, der zur Verarbeitung und/oder Fertigstellung eines Produktes in einer Vorrichtung stattfinden kann. Beispielsweise werden in der pharmazeutischen Industrie Injektionsfläschchen über ein konventionelles Fließband, einen Förderstern oder einen Förderrechen zunächst zu einer Befülleinrichtung geführt, dort befüllt, um anschließend über das Fließband zu weiteren Prozessstationen transportiert zu werden. Derartige Systeme können relativ unflexibel, störanfällig und wartungsintensiv sein.

Neuerdings gibt es Vorrichtungen zur Manipulation von Gegenständen, bei denen ein als Mover bezeichneter Transportkörper in einem elektromagnetischen Feld vorzugsweise berührungslos in zumindest zwei Freiheitsgraden bewegbar und/oder drehbar ist. Der Mover wird magnetisch an eine Stator-Anordnung (Planarmotorsystem) angekoppelt und levitiert berührungslos wenige Millimeter über der Stator-Anordnung. Die Stator-Anordnung besteht aus mindestens einer Kachel und kann modular an die gegebenen Raumbedingungen positioniert und verändert werden.

Die Erfindung betrifft weiter ein Verfahren zum Befüllen eines Gegenstandes, der von einem Mover auf einer Begrenzungswand eines geschützten Innenraums zu einer Befülleinrichtung transportiert und durch die Befülleinrichtung befüllt wird.

Die Erfindung betrifft weiterhin die Verwendung einer Begrenzungswand eines geschützten Innenraums als Antriebsfläche.

Beispielsweise offenbart die EP 3 945 046 A1 eine Behälterbehandlungsanlage zur Behandlung von Behältern. Die Behälterbehandlungsanlage weist mehrere Behandlungseinrichtungen zum Behandeln der Behälter und ein Planarantriebssystem zum Transportieren der Behälter auf. Das Planarantriebssystem ist dazu konfiguriert, mehrere Bewegungsvorrichtungen individuell nach jeweils einem von mehreren Behandlungsprofilen zur unterschiedlichen Behälterbehandlung zu einer Auswahl aus den mehreren Behandlungseinrichtungen zu bewegen, wobei die mehreren Behandlungsprofile jeweils eine unterschiedliche Auswahl aus den mehreren Behandlungseinrichtungen aufweisen. Vorteilhaft ermöglicht die Behälterbehandlungsanlage eine flexible Behandlung unterschiedlicher Behälter (unterschiedliche Formate, Inhalte, Gestaltungen, Gebinde, Verpackungen usw.) ab Losgröße 1.

Ferner beschreibt die EP 4 338 261 A1 einen Läufer für ein Planarantriebssystem mit einem Gehäuse und zumindest einer Magnetanordnung. Das Gehäuse weist einen Gehäusegrundkörper und eine Abdeckung auf. Die Magnetanordnung ist in einer Ausnehmung des Gehäusegrundkörpers angeordnet. Die Abdeckung ist derart am Gehäusegrundkörper angebracht, dass das Gehäuse fluiddicht ausgestaltet ist, die Abdeckung die Ausnehmung abdeckt und die Magnetanordnung in einem Inneren des fluiddichten Gehäuses angeordnet ist. Die Erfindung betrifft ferner ein Herstellungsverfahren für einen solchen Läufer und ein Planarantriebssystem mit einem solchen Läufer.

Die Dokumente LILIENTHAL PETER F II ET AL: "A FLEXIBLE MANUFACTURING WORKSTATION", AT & T Technical Journal, Bd. 67, Nr. 2, 1. April 1988 (1988-04-01), Seiten 5-14, US 2020/262060 A1, DE 10 2019 215745 A1 und JPH01116065A gehören auch zum Stand der Technik.

Die Erfindung betrifft weiterhin die Verwendung einer Begrenzungswand eines geschützten Innenraums als Antriebsfläche.

Zur Lösung der genannten Aufgabe sind erfindungsgemäß die Merkmale des Anspruchs 1 vorgesehen. Insbesondere wird somit zur Lösung der genannten Aufgabe bei einer Vorrichtung der eingangs beschriebenen Art vorgesehen, dass die Antriebsfläche als dichte Begrenzung, insbesondere als Begrenzungswand eines geschützten Innenraums ausgebildet ist. Dies kann erfindungsgemäß die Gesamtheit der Begrenzungswände oder Teile davon beinhalten. Somit kann sich die Antriebsfläche auch auf weitere, möglicherweise nicht horizontale, Flächen innerhalb des geschützten Innenraums erweitern, wodurch eine erweiterte Funktionalität und/oder Arbeitskapazität sowie eine größere Flexibilität erreicht werden kann. Somit kann die Stator-Anordnung an der Begrenzungswand des geschützten Innenraums ausgebildet werden, wodurch gleichzeitig Raum sowie Material gespart werden kann.

Von Vorteil ist dabei, dass ein Transport im geschützten Innenraum abriebsfrei ist. Somit ist ein geringerer Aufwand für die Reinigung erforderlich. Es kann somit auch erreicht werden, dass während der Produktion keine Partikel freigesetzt werden, die Verunreinigungen zum Beispiel bei einer Abfüllung erzeugen könnten.

Bei einer weiteren vorteilhaften Ausgestaltung der Erfindung kann vorgesehen sein, dass die Stator-Anordnung außerhalb eines geschützten Innenraums angeordnet ist. Somit ist die Stator-Anordnung von den Bedingungen im Innenraum trennbar. Beispielsweise kann vorgesehen sein, dass die Stator-Anordnung an einer Begrenzungswand befestigt ist. Somit ergibt sich eine besonders platzsparende Variante. Hierbei kann vorgesehen sein, dass die Begrenzungswand vertikal und/oder horizontal und/oder schräg angeordnet ist. Es sind somit unterschiedlich orientierte Begrenzungswände nutzbar.

Bei einer Ausgestaltung der Erfindung kann vorgesehen sein, dass der wenigstens eine Mover im geschützten Innenraum angeordnet ist. Vorteilhaft ist dabei, dass viele Prozesse, insbesondere Förder- und/oder Transportprozesse, im geschützten Innenraum ohne ein manuelles Eingreifen ausführbar sind. Ein kontrollierter Austausch beispielsweise von Luft zwischen Innenraum und Umgebung ist somit erreichbar. Ein solch kontrollierter Austausch ist bei aseptischen Anwendungen mit Isolatoren oder bei toxischen Verfahren in Containments von großer Bedeutung. Weiterhin können gegebenenfalls kostspielige und zeitaufwändige Reinraumtests in Form von beispielsweise mikrobiologischen Abklatschplatten verringert werden. Die Ausgestaltung kann es beispielsweise ermöglichen, den wenigstens einen Mover in einem Innenraum zu betreiben, in den keine Substanzen von außen unkontrolliert eintreten und/oder aus dem keine Substanzen nach außen unkontrolliert austreten können.

Es kann weiterhin vorgesehen sein, dass der wenigstens eine Mover außerhalb eines geschützten Innenraums angeordnet ist. Für ein funktionelle Anordnung kann folglich eine korrespondierende Stator-Anordnung innerhalb des geschützten Innenraums eingefasst sein. Somit können vorteilhaft Prozesse außerhalb des geschützten Innenraums durchgeführt werden. Es kann somit verhindert werden, dass Partikel und/oder Verunreinigungen, die durch oder an der Stator-Anordnung entstehen und/oder freigesetzt werden, aus dem Innenraum unkontrolliert austreten.

Bei einer weiteren vorteilhaften Ausgestaltung der Erfindung kann vorgesehen sein, dass die Begrenzungswand des geschützten Innenraums einen Kopplungsbereich aus der Stator-Anordnung und dem wenigstens einen Mover beinhaltet, insbesondere wobei die Fläche innerhalb des Kopplungsbereiches kleiner als die Fläche der Begrenzungswand sein kann. Dabei ist vorteilhaft, dass außerhalb des Kopplungsbereichs und/oder im geschützten Innenraum weitere Vorrichtungen angebracht werden können, beispielsweise magnetisch nicht neutrale Vorrichtungen und/oder Konstruktionen, welche beeinflussend und störend auf das Magnetfeld oder den Bewegungsspielraum der Mover wirken können.

Beispielsweise können Greifvorrichtungen, Waagen, Verschlusssysteme, Befülleinrichtungen oder konventionelle Transportsysteme zur Manipulation von Behältnissen außerhalb des Kopplungsbereichs angebracht werden.

Bei einer weiteren vorteilhaften Ausgestaltung der Erfindung kann vorgesehen sein, dass die Begrenzungswand aus einer magnetisch neutralen Trennschicht gefertigt ist. Erfindungsgemäß ist vorgesehen, dass ein, insbesondere der bereits erwähnte, Kopplungsbereich aus einer magnetisch neutralen Trennschicht gefertigt ist. Magnetisch neutral im Sinne der Erfindung bedeutet, dass durch die verwendeten Materialen eine Störung oder Beeinträchtigung einer magnetischen Kopplung zwischen Mover und Stator-Anordnung gemindert oder vermieden werden kann.

Beispielsweise kann die Trennschicht aus einer Edelstahl- und/oder Glasschicht gefertigt sein oder eine solche umfassen. Alternativ oder zusätzlich kann die Trennschicht auch aus gasdichtem Kunststoff oder Verbundwerkstoff realisiert sein. Somit sind besonders geeignete Materialien für geschützte Innenräume verwendbar.

Vorzugsweise ist die Trennschicht weniger als 2 mm stark. Somit kann der Mover für eine starke magnetische Kopplung sehr nahe an die Stator-Anordnung herangeführt werden.

Bei einer Ausgestaltung der Erfindung kann vorgesehen sein, dass die Begrenzungswand und/oder ein, beispielsweise der bereits erwähnte, Kopplungsbereich durch Trägerkomponenten stabilisiert ist. Die Verwendung von Trägerkomponenten ist vorteilhaft für die Statik der Vorrichtung.

Hierbei ist es günstig, wenn die Trägerkomponenten aus magnetisch neutralen Materialen bestehen. Somit ist eine Störung der Ankopplung und/oder eine Deformation der magnetischen Felder reduzierbar oder sogar vermeidbar. Dies ist in Verbindung mit einer magnetisch neutralen Trennschicht besonders vorteilhaft.

Bei einer weiteren vorteilhaften Ausgestaltung der Erfindung kann vorgesehen sein, dass die Stator-Anordnung in wenigstens einem Rack aufgebaut ist. Vorteilhaft ist hierbei, dass die Stator-Anordnung in dem wenigstens einem Rack stabilisierbar ist.

Hierbei ist es günstig, wenn das wenigstens eine Rack direkt an der Begrenzungswand und/oder einem, beispielsweise dem bereits erwähnten, Kopplungsbereich angelagert ist. Dadurch kann die Stator-Anordnung sehr nah für eine magnetische Kopplung an den Mover bereitgestellt werden.

Alternativ kann das Rack auch frei an der Begrenzungswand und/oder dem Kopplungsbereich positioniert sein, um eine flexiblere Bewegung der Racks zu ermöglichen.

Bevorzugt ist das mindestens eine Rack von und zum Einsatzort bewegbar und/oder am Einsatzort zwischen einer der Begrenzungswand angenäherten Arbeitsposition und einer von der Begrenzungswand entfernten Position verstellbar ist. Da Stator-Anordnungen zugänglich sein müssen, beispielsweise für Wartungs- und/oder Reparaturarbeiten, ist eine Ausgestaltung der Stator-Anordnung in verfahrbaren Racks vorteilhaft. Zudem kann das Rack vorteilhaft zu einer von der Begrenzungswand entfernten Position fahren, wodurch Stator-Anordnungen entnommen werden können, ohne selbst Schaden zu nehmen oder Schaden an der Begrenzungswand zu verursachen.

Bei einer weiteren vorteilhaften Ausgestaltung der Erfindung kann vorgesehen sein, dass die Begrenzungswand und/oder die Trennschicht von der Vorrichtung abnehmbar sind. Von Vorteil ist dabei, dass die Begrenzungswand und/oder die Trennschicht vom Innenraum heraus abgenommen werden können, wodurch Stator-Anordnungen für eine kostengünstige Wartung erreichbar gemacht werden können.

Bei einer nächsten vorteilhaften Ausgestaltung der Erfindung kann vorgesehen sein, dass der geschützte Innenraum mindestens zwei Kammern hat, insbesondere wobei die mindestens zwei Kammern durch eine Zwischenwand getrennt sind, die vorzugsweise mindestens eine kleine Zugangsöffnung aufweist. Von Vorteil ist dabei, dass verschiedene Prozessschritte eines Verfahrens voneinander getrennt werden können, um weitere Kontaminations- und oder Partikelquellen zu beseitigen. Die mindestens eine kleine Zugangsöffnung erlaubt erfindungsgemäß den Transport von beispielsweise offenen Gefäßen von einer Kammer in eine weitere Kammer, um dort befüllt und/oder verschlossen zu werden.

Vorzugsweise ist die Zwischenwand als Begrenzungswand ausgebildet, an der weitere Prozesse getrennt voneinander durchgeführt werden können.

Alternativ oder zusätzlich kann in einer der Kammern Überdruck erzeugt werden, sodass in diese Kammer keine Kontaminationen oder Partikel von der anderen Kammer durch mindestens eine kleine Zugangsöffnung gelangen können.

Bei einer weiteren vorteilhaften Ausgestaltung der Erfindung ist erfindungsgemäß vorgesehen, dass sich zumindest eine Prozessstation fest montiert oder auf einem Mover im geschützten Innenraums befindet. Somit können Gegenstände während des gesamten Manipulationsprozesses flexibel im geschützten Innenraum prozessiert werden.

Beispielsweise kann eine Befülleinrichtung fest montiert oder auf einem Mover positioniert sein. Eine Befülleinrichtung ermöglicht die Regulierung eines Füllstandes eines Gegenstandes.

Bevorzugt ist die zumindest eine Prozessstation an der Begrenzungswand und/oder in einem, beispielsweise dem bereits erwähnten, Kopplungsbereich befindlich. Dadurch kann sehr vorteilhaft ein mehrstufiges Fertigungsverfahren modular und dynamisch realisiert werden, da die Mover im Wesentlichen frei auf der Antriebsfläche verfahrbar sind und Verfahrwege leicht modifiziert werden können, insbesondere bei geschlossenem Innenraum und/oder ohne bewegliche Teile. Durch die erfindungsgemäße Modularität und Dynamik kann ein Verfahren und/oder Prozess schnell angepasst und verändert werden, ohne den geschützten Reinraum zu gefährden.

Es ist weiterhin möglich, dass sich die Prozessstation in einer Kammer angeordnet und in einer zweiten Kammer befestigt befindet. Vorteilhaft ist dabei, dass die Prozessstation sicher vor Verunreinigungen in einer Kammer befestigt positioniert sein kann, und zur Prozessierung in eine zweite Kammer eingebracht werden kann. Beispielsweise kann eine Prozessstation durch eine Öffnung, beispielsweise durch eine Schleuse, von einer Kammer in eine zweite Kammer eingebracht werden.

Bei einer nächsten vorteilhaften Ausgestaltung der Erfindung kann vorgesehen sein, dass die Stator-Anordnung an den Begrenzungswänden und/oder an einem, insbesondere den bereits erwähnten, Kopplungsbereichen, und/oder zwei benachbarten Wänden des geschützten Innenraums, so befestigt ist, dass der mindestens eine Mover den mindestens einen Gegenstand innerhalb der mindestens zwei Kammern und/oder durch die mindestens eine kleine Zugangsöffnung der Zwischenwand zwischen den mindestens zwei Kammern transportieren kann. Von Vorteil ist dabei, dass Arbeitsschritte, bei denen Partikel oder Verunreinigungen freigesetzt werden können, von nachfolgenden Arbeitsschritten getrennt werden können. Somit kann eine Kontaminationsverschleppung vermindert oder sogar verhindert werden.

Bei einer nächsten vorteilhaften Ausgestaltung der Erfindung kann vorgesehen sein, dass die Stator-Anordnung innerhalb der mindestens einen Zwischenwand zwischen den mindestens zwei Kammern vorzugsweise vertikal angeordnet ist. Vorteilhaft ist hierbei, dass die mindestens eine Zwischenwand eine Antriebsfläche für Mover für Hubbewegungen bereitstellt.

Alternativ oder zusätzlich kann die mindestens eine Zwischenwand als Kopplungsbereich ausgearbeitet sein, welcher mindestens einen magnetisch neutralen Bereich zur Befestigung von Greifvorrichtungen, Wagen, Verschlusssystemen, Befülleinrichtungen oder anderen Prozessstationen zur Manipulation von Behältnissen aufweisen kann.

Bei einer weiteren vorteilhaften Ausgestaltung der Erfindung kann vorgesehen sein, dass eine Stator-Anordnung innerhalb der mindestens einen Zwischenwand in wenigstens einem Rack aufgebaut ist. Dadurch kann die Stator-Anordnung für Wartungs- und/oder Reparaturarbeiten sehr einfach aus der Zwischenwand bewegt werden.

Bei einer alternativen oder zusätzlichen Ausgestaltung der Erfindung kann vorgesehen sein, dass die oder eine Begrenzungswand und/oder die oder eine Trennschicht der einen Zwischenwand abnehmbar sind. Dadurch kann die oder eine Stator-Anordnung vom Innenraum heraus erreichbar für Wartungsarbeiten sein, was vorteilhaft ist, insbesondere, wenn die oder eine Stator-Anordnung stationär, beispielsweise in stationären Racks, in der Zwischenwand befestigt ist.

Bei einer weiteren vorteilhaften Ausgestaltung der Erfindung kann vorgesehen sein, dass der geschützte Innenraum wenigstens eine durchströmte Zone aufweist. In einer durchströmten Zone kann vorteilhaft die Partikelkonzentration in der Luft verringert werden, was vorteilhaft für die Reinheit der zu bearbeiteten Produkte, insbesondere der zu befüllenden Produkte, ist.

Insbesondere kann die Antriebsfläche so ausgerichtet sein, dass der wenigstens eine Mover in die Zone und/oder in der Zone verfahrbar ist. Folglich kann eine durchströmte Zone realisiert sein, die in ihrer Fläche kleiner als die Grundfläche des geschützten Innenraums ist und durch Mover erreichbar und befahrbar ist. Vorteilhaft bei einer derartigen durchströmten Zone ist, dass weniger Energie für den Luftstrom benötigt wird, wodurch Kosten eingespart werden können. Vorteilhaft ist alternativ oder zusätzlich, dass ein weiteres Mittel bereitgestellt ist, mit dem ein Eindringen von Verunreinigungen in einen Arbeitsbereich verhinderbar ist.

Bei einer weiteren vorteilhaften Ausgestaltung der Erfindung kann vorgesehen sein, dass die Stator-Anordnung von einem dichten Tunnel umhüllt ist, wobei die Antriebsfläche durch eine Umhüllung des Tunnels ausgebildet ist. Somit kann vorteilhaft die Antriebsfläche auf einem Tunnel innerhalb des geschützten Innenraums ausgebildet sein, wobei die Antriebsfläche und der Mover platzsparend in die Vorrichtung eingebracht werden können.

Alternativ kann vorgesehen sein, dass die Antriebsfläche innerhalb des geschützten Innenraums unabhängig von der Umhüllung ausgebildet ist. Hierdurch ist insbesondere eine Bewegung des oder eines Mover separat von der Umhüllung bzw. des Tunnels möglich, sodass der oder ein Mover flexibel in dem geschützten Innenraum bewegt und eingesetzt werden kann/ können.

Bei einer weiteren vorteilhaften Ausgestaltung der Erfindung kann vorgesehen sein, dass der Tunnel einseitig oder zweiseitig von außerhalb des geschützten Innenraums zugänglich ist. Dies kann beispielsweise durch die hierin beschriebenen Zugänge ermöglicht sein. Somit kann vorteilhaft von außerhalb des geschützten Innenraums auf die Statoren der Stator-Anordnung, insbesondere im Wartungs- und/oder Reparaturfall, zugegriffen werden.

Alternativ oder zusätzlich kann vorgesehen sein, dass der Tunnel entlang eines vollen um seine Längsausstreckung verlaufenden Umfangs vom geschützten Innenraum umgeben ist. Somit kann der Tunnel vollständig in den geschützten Innenraum integriert sein, wodurch eine Integrität des geschützten Innenraums besonders hoch sein kann. Ferner kann außerhalb des geschützten Innenraums vorteilhaft Platz eingespart werden.

Bei einer weiteren vorteilhaften Ausgestaltung der Erfindung kann vorgesehen sein, dass der geschützte Innenraum einen Profilkörper aufweist, wobei der Profilkörper die Stator-Anordnung und die Trennschicht aufweist. Hierdurch kann eine Antriebsfläche für Mover mit einer Niveau-Differenz bezüglich eines Bodens des geschützten Innenraums ausgebildet sein, was Kontaminationen, die vom Boden stammen, vermindern kann. Der Profilkörper kann in den geschützten Innenraum eingesetzt bzw. aufgestellt sein, wobei der Profilkörper insbesondere wenigstens einen Fuß aufweist, der in sich eine Verbindung zum Außenraum des geschützten Innenraums ausbildet, sodass vorteilhaft beispielsweise Elektrik dem Profilkörper, insbesondere der Stator-Anordnung, zugeführt werden kann. Der wenigstens eine Fuß kann auch vorteilhaft dazu dienen, Abwärme der Stator-Anordnung, abzuführen, sodass eine Überhitzung der Vorrichtung vermieden werden kann.

Insbesondere kann vorgesehen sein, dass die Trennschicht austauschbar an dem Profilkörper befestigt ist. Somit kann der Profilköper verschlossen werden, sodass kein Stoffaustausch zwischen Stator-Anordnung und dem geschützten Innenraum stattfindet. Die Trennschicht ist austauschbar, wodurch vorteilhaft defekte und/oder zu wartende Stator-Anordnungen einfach ausgetauscht werden können.

Insbesondere kann vorgesehen sein, dass die Trennschicht klebend an dem Profilkörper befestigt ist. Somit kann besonders einfach der Profilkörper verschlossen werden. Dabei kann der Profilkörper sogar Klebeflächen für die Trennschicht aufweisen, sodass die Trennschicht nicht auf die Stator-Anordnung geklebt wird. Die Trennschicht liegt insbesondere bei dieser Ausführungsform auf der Stator-Anordnung auf, sodass kein Luftspalt zwischen Trennschicht und Stator-Anordnung entsteht. Somit kann die magnetische Kopplung von Mover und Stator-Anordnung besonders effizient und störungsfrei ausgebildet werden.

Vorzugsweise ist die Trennschicht folienartig ausgebildet. Eine als Folie ausgebildete Trennschicht ist besonders einfach zu handhaben, insbesondere wenn sie, wie zuvor beschrieben, an den Profilkörper geklebt wird.

Die als Folie ausgebildete Trennschicht kann in einer bevorzugten und vorteilhaften Ausführungsform ein Glasfaserkomposit sein. Weitere magnetisch neutrale Materialen können alternativ und nach Wunsch des Verwenders zur Ausbildung der Trennschicht benutzt werden.

Bei einer weiteren vorteilhaften Ausgestaltung der Erfindung kann vorgesehen sein, dass der Tunnel und/oder der Profilkörper Zugänge außerhalb des geschützten Innenraums ausbildet/ ausbilden. Hierbei werden die Zugänge vorteilhaft durch Stirnenden des Tunnels und/oder Profilkörpers gebildet. Insbesondere durch diese Ausführungsform kann eine Entnahme der Stator-Anordnung, beispielsweise im Wartungsfall, vereinfacht werden, ohne dabei den geschützten Innenraum betreten zu müssenbzw. durch Manipulationen zu verunreinigen. Somit kann eine Aufnahme bzw. Wiederaufnahme eines Betriebes in der Vorrichtung besonders schnell durchgeführt werden.

Alternativ oder zusätzlich sind zur Lösung der genannten Aufgabe die Merkmale des unabhängigen auf ein Verfahren gerichteten Anspruch erfindungsgemäß vorgesehen. Insbesondere wird somit bei einem Verfahren der eingangs beschriebenen Art erfindungsgemäß vorgeschlagen, dass der mindestens eine Gegenstand von einem Mover auf einer Antriebsfläche des geschützten Innenraums zu einer Prozessstation, beispielsweise einer Befülleinrichtung bewegt und durch die Befülleinrichtung befüllt wird, wobei die Befülleinrichtung im geschützten Innenraum, insbesondere auf der Antriebsfläche, positioniert oder auf einem weiteren Mover befestigt ist. Bevorzugt wird vorgesehen, dass der Mover mit dem mindestens einen Gegenstand eine Hubbewegung zu der Befülleinrichtung ausführt, welche sich oberhalb der horizontalen Bodenebene der Vorrichtung befindet. Damit beeinflusst die vertikal angeordnete Befülleinrichtung nicht den Transportweg der Vorrichtung, wodurch in flexibler Art und Weise weitere Mover zu weiteren Prozessstationen geführt werden können.

Alternativ ist auch eine Bewegung der Befüllvorrichtung zum Mover mit dem mindestens einen Gegenstand hin denkbar.

Zusätzlich sind zur Lösung der genannten Aufgabe die Merkmale des unabhängigen, auf eine Verwendung gerichteten Anspruchs erfindungsgemäß vorgesehen. Insbesondere wird somit bei einer Verwendung der eingangs beschriebenen Art erfindungsgemäß vorgeschlagen, dass eine Begrenzungswand eines geschützten Innenraums als Antriebsfläche wenigstens eines Movers, der an eine Stator-Anordnung angekoppelt ist, verwendet wird. Bevorzugt wird vorgesehen, dass die Stator-Anordnung außerhalb des geschützten Innenraums positioniert ist. Somit wird eine räumliche Trennung von Mover und Stator-Anordnung ermöglicht, welche üblicherweise nicht abgegrenzt in einem Raum sind. Vorteilhaft ist dabei, dass eine Wartung und/oder eine Umrüstung der Stator-Anordnung eines geschützten Innenraums, beispielsweise eines Isolators oder Containments, flexibel umsetzbar ist.

Die Erfindung wird nun anhand von Ausführungsbeispielen näher beschrieben, ist aber nicht auf die gezeigten Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt, teilweise geschnitten:
- Fig. 1: eine Seitenansicht einer Vorrichtung mit unterschiedlich orientierten Stator-Anordnungen und Movern,
- Fig. 2: eine Seitenansicht einer Vorrichtung mit einem Kopplungsbereich,
- Fig. 3: eine Seitenansicht einer Vorrichtung mit Racks,
- Fig. 4: eine Seitenansicht einer Vorrichtung mit vertikal angeordneten Prozessstationen,
- Fig. 5: eine Seitenansicht einer Vorrichtung mit zwei Kammern,
- Fig. 6: eine Seitenansicht einer Vorrichtung mit zwei Kammern und einer Stator-Anordnung in einer Zwischenwand,
- Fig. 7: eine Seitenansicht einer Vorrichtung mit zwei Kammern und einer Prozessstation, die in einer Kammer befestigt ist und in eine zweite Kammer hineinragt,
- Fig. 8: eine Vorderansicht einer Vorrichtung mit einer im geschützten Innenraum befindlichen Mover-Stator-Anordnung,
- Fig. 9: einen Seitenansicht einer Vorrichtung mit einer in einem Tunnel eingefassten Stator-Anordnung,
- Fig. 10: eine Vorderansicht einer Vorrichtung mit einer in einem Tunnel eingefassten Stator-Anordnung,
- Fig. 11: eine Vorderansicht einer Vorrichtung mit einer in einem Profilkörper eingefassten Stator-Anordnung,
- Fig. 12: eine Seitenansicht die Vorrichtung aus Fig. 11 mit einer in dem Profilkörper eingefassten Stator-Anordnung,
- Fig. 13: eine detaillierte Seitenansicht einer Variante zu Fig. 11 und
- Fig. 14: eine detaillierte Seitenansicht einer weiteren Variante zu Fig. 11.

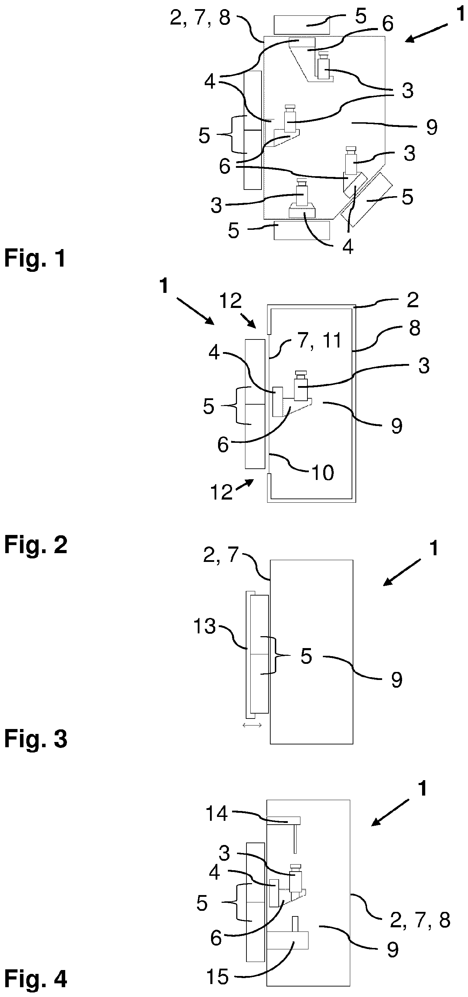

Figur 1 zeigt eine im Ganzen mit 1 bezeichnete erfindungsgemäße Vorrichtung 1. Die Vorrichtung 1 hat ein Gehäuse 2, das einen geschützten Innenraum 9 hat. Zur Ein- und Ausgabe des mindestens einen Gegenstandes 3 aus dem geschützten Innenraum 9 hat die erfindungsgemäße Vorrichtung 1 für Isolatoren oder Containments übliche Schleusen und- oder Dekontaminationsbereiche.

Alternativ oder zusätzlich kann die Vorrichtung 1 und/oder das Gehäuse 2 bewegbar sein.

In dem geschützten Innenraum 9 befinden sich am Boden, an der Decke, an einer vertikalen und schrägen Wand mindestens ein Gegenstand 3, wobei der mindestens eine Gegenstand 3 auf einer Aufnahme 6 eines Movers 4 positioniert ist. Der mindestens eine Mover 4 ist magnetisch an eine Stator-Anordnung 5 gekoppelt.

Figur 1 zeigt, dass vier Stator-Anordnungen 5, die jeweils aus einem Stator oder mehreren Statoren zusammengesetzt sind, außerhalb des geschützten Innenraums 9 an einer vertikalen, horizontalen oder schrägen Wand positioniert sind. Eine Stator-Anordnungen 5 kann alternativ auch in das Gehäuse 2 und/oder in eine Begrenzungswand 8 und/oder zwischen Gehäuse 2 und Begrenzungswand 8 positioniert werden.

Der mindestens eine Mover 4 kann passiv, durch beispielsweise integrierte Permanentmagnete (nicht gezeigt) oder aktiv, durch beispielsweise ein integriertes Spulenpaket (nicht gezeigt), an der Antriebsfläche 7 betrieben werden. Der aktive Betrieb des mindestens einen Mover 4 kann durch eine vorzugsweise berührungslose Bewegung, insbesondere eine Bewegung längs der Antriebsfläche oder mit einer Komponente quer zu dieser, eine Drehung und/oder ein Kippen, relativ zur Antriebsfläche 7 realisiert sein. In der hier gezeigten Ausführungsform bildet die Antriebsfläche 7 die Begrenzungswand 8 der Vorrichtung 1. Die erfindungsgemäße Vorrichtung 1 kann zur Bewegung des mindestens einen Gegenstandes 3 zusätzlich konventionelle Transportvorrichtungen wie Fließbänder, Sternräder und/oder Rechensysteme aufweisen.

Bei einer Ausführungsform gemäß der Figur 2 hat eine Vorrichtung 1 einen Kopplungsbereich 10, der in eine vertikale Begrenzungswand 8 eines Gehäuses 2 eingearbeitet ist. Dabei ist die Fläche des Kopplungsbereichs 10 kleiner als die Fläche der vertikalen Begrenzungswand 8. Die vertikale Begrenzungswand 8 kann innerhalb oder außerhalb des Kopplungsbereich 10 und auf Seiten des geschützten Innenraums 9 verschiedene Prozessstationen 15 positioniert haben (nicht gezeigt). Diese Prozessstationen 15 können durch mindestens einen Mover 4 zur Manipulation mindestens eines Gegenstandes 3 angefahren werden. In der Figur 2 ist die Antriebsfläche 7 als eine magnetisch neutrale Trennschicht 11 realisiert, beispielsweise eine aus Glas, Edelstahl, gasdichtem Kunststoff oder aus Verbundwerkstoff gefertigte Trennschicht 11. Weiterhin ist der Kopplungsbereich 10 durch magnetisch neutrale Trägerkomponenten 12, beispielsweise Riegel und/oder Winkel und/oder Profilschienen und/oder Rippen und/oder sonstige Versteifungen, an das Gehäuse 2 und/oder die Begrenzungswand 8 positioniert und stabilisiert.

Alternativ oder zusätzlich kann auch die Stator-Anordnung 5 durch Trägerkomponenten 12 mit dem Gehäuse 2 und/oder der Trennschicht 11 verbunden werden.

Bei einer Ausführungsform gemäß Figur 3 ist eine Stator-Anordnung 5 in einem Rack 13 außerhalb des geschützten Innenraums 9 aufgebaut. Für beispielsweise Reparatur- und/oder Wartungsarbeiten kann die Stator-Anordnung 5 durch das Rack 13 von einer der Begrenzungswand 8 angenäherten Kontaktposition weggefahren werden, sodass die Stator-Anordnung 5 zugänglich ist.

Zusätzlich kann das Rack 13 einen Antrieb besitzen (nicht gezeigt), um einzelne Kacheln der Stator-Anordnung 5 und/oder die Stator-Anordnung 5 innerhalb einer oder zwischen mehreren Antriebsflächen 7 zu bewegen.

Bei der Ausführungsform gemäß Figur 4 ist eine Stator-Anordnung 5 an eine vertikale Wand angeordnet. Im geschützten Innenraum 9 der Vorrichtung 1 ist ein Mover 4, der mindestens einen Gegenstand 3 auf einer Aufnahme 6 hält. An der vertikalen Wand sind oberhalb des Movers 4 eine Befülleinrichtung 14 und unterhalb des Movers 4 eine weitere Prozessstation 15 fest montiert. Der Mover 4 kann zum Befüllen des mindestens einen Gegenstands 3 zur Befülleinrichtung 14 fahren. Nach erfolgter Füllung kann der Mover 4 mit dem mindestens einen Gegenstand 3 zu der Prozessstation 15 fahren, die vorzugsweise eine Waage sein kann, um den Füllstand des mindestens einen Gegenstand 3 zu messen.

Alternativ kann die Befülleinrichtung 14 und/oder die Prozessstation 15 auf einem Mover 4 positioniert sein (nicht gezeigt). Dadurch kann der Mover 4 relativ zu der Befülleinrichtung 14 und/oder der Prozessstation 15 bewegt werden.

Bei einem weiteren Ausführungsbeispiel könnte(n) die Prozessstation 15 und/oder die Befülleinrichtung 14 auf einem konventionellen Bewegungssystem, insbesondere wie bereits erwähnt, angeordnet sein.

Mit einer erfindungsgemäßen Vorrichtung 1 kann somit ein Verfahren zum Befüllen eines Gegenstandes, vorzugsweise eines Vials, einer Spritze, einer Karpulle und/oder einer Ampulle oder eines Injektionsfläschchens, ausgeführt werden, das wie folgt ablaufen könnte.

Ein Mover 4 bewegt mindestens einen nicht oder teilweise befüllten Gegenstand 3 zu einer Waage, um das Leergewicht des mindestens einen nicht oder teilweise befüllten Gegenstands 3 zu ermitteln. Danach bewegt der Mover 4 den mindestens einen nicht oder teilweise befüllten Gegenstand 3 entlang einer vertikalen Antriebsfläche 7 hin zu einer Befülleinrichtung 14, durch die der mindestens eine nicht oder teilweise befüllte Gegenstand 3 befüllt wird. Nach der Befüllung kann der Mover 4 mit dem mindestens einen befüllten Gegenstand 3 für weitere Verfahrensschritte zu einer weiteren Prozessstation 15, beispielsweise zurück zu der weiteren Waage, bewegt werden.

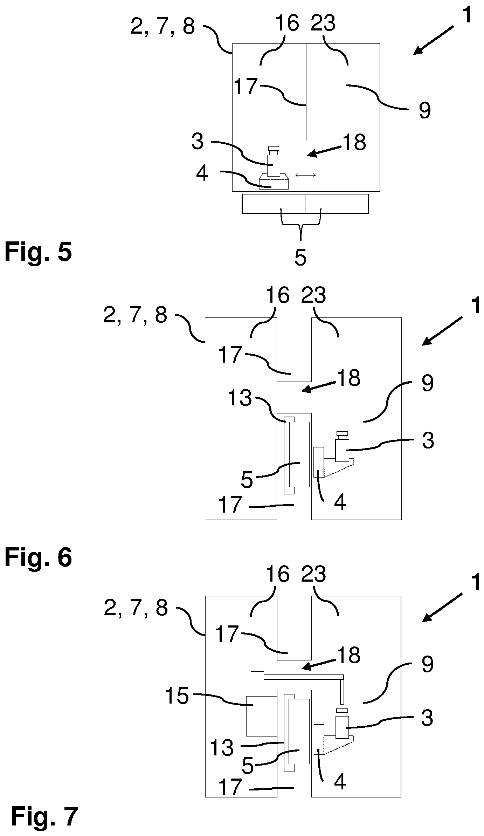

In Figur 5 ist eine Vorrichtung 1 mit zwei Kammern 16, 23 abgebildet. Die zwei Kammern 16, 23 sind durch eine Zwischenwand 17 ausgebildet und über mindestens eine kleine Zugangsöffnung 18 miteinander verbunden. Die hier dargestellte Stator-Anordnung 5 ist am Boden der Vorrichtung 1 ausgebildet. Mindestens ein Mover 4 kann durch eine Horizontalbewegung durch die mindestens eine kleine Zugangsöffnung 18 zwischen den beiden Kammern 16, 23 bewegt werden.

Alternativ oder zusätzlich kann eine Stator-Anordnung 5 auch an einer vertikalen und/oder schrägen Wand angeordnet sein, um den mindestens einen Mover 4 zwischen den mindestens zwei Kammern 16, 23 zu bewegen.

Bei der Ausführungsform gemäß Figur 6 ist mindestens ein Rack 13 mit mindestens einer Stator-Anordnung 5 an einer Zwischenwand 17 zweier Kammern 16, 23 positioniert. Der mindestens eine Mover 4 kann vertikal und/oder horizontal an der Zwischenwand 17 bewegt werden. Durch weitere Stator-Anordnungen 5 (nicht gezeigt) kann der mindestens eine Mover 4 in oder zwischen den mindestens zwei Kammern 16, 23 bewegt werden.

Figur 7 bildet eine Vorrichtung 1 mit zwei Kammern 16, 23 ab, in der eine Prozessstation 15 an einer vertikalen Wand einer ersten Kammer 16 positioniert ist. Die hier abgebildete Prozessstation 15 ragt durch eine Zugangsöffnung 18 in die zweite Kammer 23, kann in alternativen Ausführungsformen jedoch auch in mehrere Kammern 16, 23 ragen. Die Stator-Anordnung 5 ist in eine Zwischenwand 17 eingefasst. Ein in der zweiten Kammer 23 befindlicher Mover 4 kann sich durch die magnetische Kopplung mit der Stator-Anordnung 5 zu der Prozessstationen 15 hinbewegen, wo eine Prozessierung eines Gegenstands 3 ausgeführt werden kann.

Alternativ oder zusätzlich kann die oder ein Teil der Prozessstation 15 verfahrbar sein, beispielsweise verfahrbar innerhalb einer Kammer 16, 23 oder zwischen wenigstens zwei Kammern 16, 23.

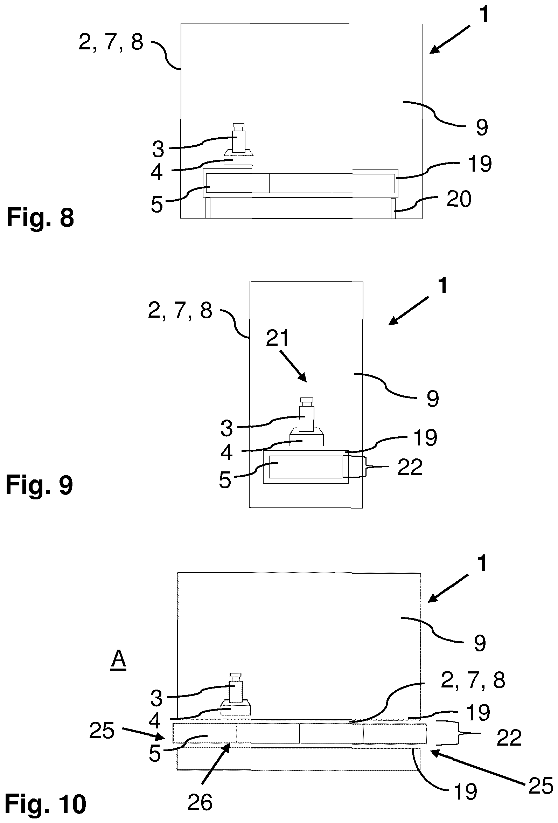

Bei einer Ausführungsform gemäß der Figur 8 befindet sich innerhalb des geschützten Raums 9 der Vorrichtung 1 ein Mover 4 mit einer korrespondierenden Stator-Anordnung 5, wobei die Stator-Anordnung 5 durch eine dichte und magnetisch neutrale Umhüllung 19 allseitig umschlossen ist. Die Umhüllung 19, mitsamt Stator-Anordnung 5, ist robust durch zwei Verankerungen 20 in dem geschützten Innenraum 9 positioniert. Die Anzahl der abstützenden Verankerungen 20 kann alternativ ausgebildet sein, weshalb eine Umhüllung 19 ohne, mit einer oder mit mehr als zwei Verankerungen 20 in dem geschützten Innenraum 9 positioniert sein kann.

Alternativ oder zusätzlich kann die Umhüllung 19, mitsamt Mover 4 und Stator-Anordnung 5, in den geschützten Innenraum 9 eingehängt und/oder eingespannt sein.

Figur 9 zeigt eine Seitenansicht einer Vorrichtung 1, in der ein Gegenstand 3 sich auf einem Mover 4 innerhalb einer durchströmten Zone 21 befindet. Dabei wird, wie für Reinräume bekannt, gefilterte Luft von der Decke in den geschützten Innenraum 9 eingelassen, um die darin vorhandene Luft zu verdrängen. Weiterhin ist in Figur 9 zu sehen, dass der Mover 4 magnetisch an eine Stator-Anordnung 5 gekoppelt ist, die von einem Tunnel 22 dicht umhüllt ist. Die den Tunnel 22 ausformende Umhüllung 19 ist zur störungsfreien Nutzung der Mover-Stator-Anwendung aus magnetisch neutralen Materialien hergestellt. Nicht dargestellt in dieser Figur sind Racks 13 oder weitere Transportvehikel, die ein Ausfahren der Stator-Anordnung 5 aus dem Tunnel 22 ermöglichen.

Figur 10 zeigt einen Tunnel 22, wie er insbesondere in Figur 9 dargestellt ist, in einer Vorderansicht. Dabei ist die Antriebsfläche 2, 7, 8 durch die Umhüllung 19 des Tunnels 22 ausgebildet.

In einer nicht gezeigten Ausführungsform kann die Antriebsfläche 2, 7, 9 auch separat bzw. unabhängig von dem Tunnel 22 bzw. dessen Umhüllung 19 innerhalb des geschützten Innenraums 9 ausgearbeitet sein, sodass die Vorrichtung 1 flexibel ausgestaltet sein kann.

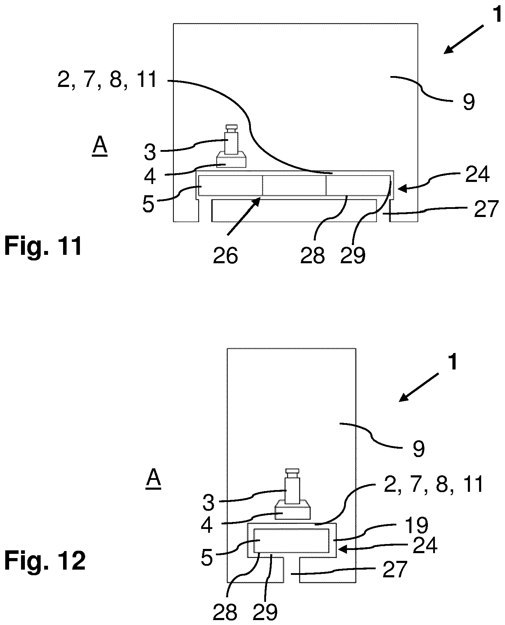

Der Tunnel 22 in Fig. 11 und 12 ist zweiseitig von außen des geschützten Innenraums 9 zugänglich. Somit können beispielsweise im Wartungsfall die Statoren der Stator-Anordnung 5 über die Zugänge 25 in den Außenraum A gebracht werden, insbesondere so wie es bezüglich Figur 9 bereits beschrieben wurde. Somit können die Statoren der Stator-Anordnung 5 gewartet werden, ohne dabei den geschützten Innenraum 9 betreten zu müssenbzw. durch Manipulationen zu verunreinigen.

Ebensolche Zugänge 25 können auch bei einem Profilkörper 24, wie er nachfolgend beschrieben ist, ausgebildet sein.

Der Tunnel 22 ist entlang eines vollen um seine Längsausstreckung verlaufenden Umfangs vom geschützten Innenraum 9 umgeben.

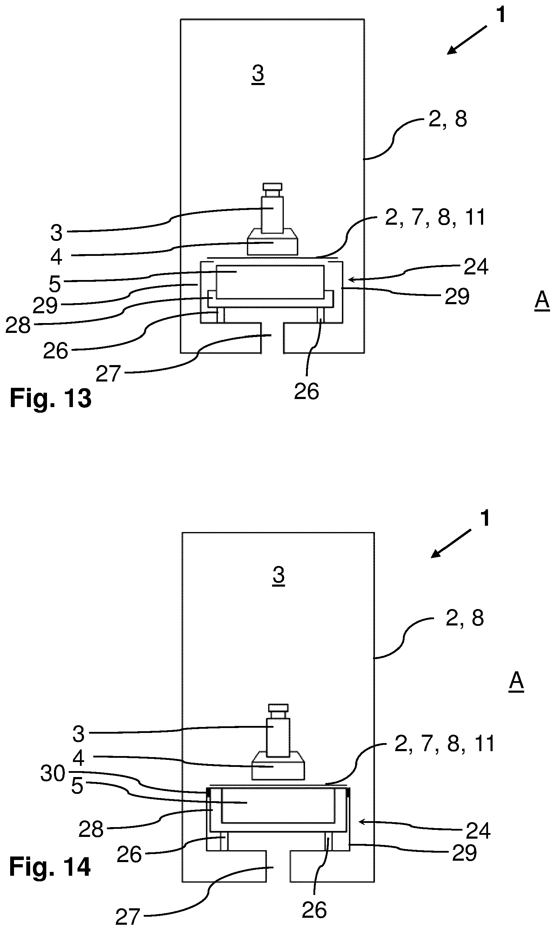

Ferner ist in Figur 10 zu erkennen, dass die Stator-Anordnung 5 mit einer Justiereinrichtung 26 (vgl. Fig. 13 und 14) versehen ist, um bei Bedarf ausgerichtet werden zu können.

Die Figuren 11 (Vorderansicht) und 12 (Seitenansicht) zeigen eine Vorrichtung 1 mit einem im geschützten Innenraum 9 befindlichen Profilkörper 24, wobei der Profilkörper 24 die Stator-Anordnung 5 und die Trennschicht 11 aufweist, insbesondere wobei die folienartige Trennschicht 11 austauschbar an dem Profilkörper 24 befestigt ist. Die folienartige Trennschicht 11 ist klebend an Klebeflächen des Profilkörpers 24 angebracht und verschließt diesen.

Fig. 13 und 14 zeigen zwei Varianten des Aufbaus aus Fig. 11 und 12 detaillierter.

Bei einer ersten Variante gemäß Fig. 13 ist die Trennschicht 11, die hierzu folienartig ausgebildet sein kann, auf ein Außenprofil 29, beispielsweise aus Blech, des Profilkörpers 24 aufgelegt und mit diesem verklebt. In dem so gebildeten Raum 31, der über den Fuß 24 mit dem Außenraum A verbunden ist, ist das Innenprofil, beispielsweise auf Aluminium oder Kunststoff (z.B. glasfaserverstärktem Kunststoff) angeordnet. Dieses Innenprofil 28 nimmt die Stator-Anordnung 5 auf und ist auf Justiereinrichtungen 26 aufgestellt, um eine Oberseite der Stator-Anordnung 5 auf einen Abschluss des Außenprofils 29 auszurichten.

Bei der Anordnung gemäß Fig. 15 ist die - ebenfalls beispielsweise folienartige - Trennschicht 11 durch ein vorzugsweise aus Aluminium oder Kunststoff wie GFK oder einem anderen, magnetisch neutralen Material bestehendes Innenprofil 28 des Profilkörpers 24 begrenzt. Ein vorzugsweise aus Blech bestehendes Außenprofil 29 des Profilkörpers 24 umgibt das Innenprofil 28 und ist durch ein Dichtelement 30, beispielsweise durch eine Dichtmasse wie Silikon oder in Form einer Dichtlippe oder eines Dichtprofils, zum Innenprofil 28 abgedichtet, sodass Kontaminationen nicht in den geschützten Innenraum 9 gelangen können.

Die Trennschicht 11 liegt auf der Stator-Anordnung 5 auf, sodass kein Luftspalt zwischen Trennschicht 11 und Stator-Anordnung 5 entsteht. Somit wird die magnetische Kopplung von Mover 4 und Stator-Anordnung 5 besonders effizient und störungsfrei ausgebildet.

Der Profilkörper 24 gemäß den Figuren 11 und 12 ist in den geschützten Innenraum 9 eingesetzt bzw. aufgestellt und weist zwei Füße 27 auf (siehe Figur 11), die in sich eine Verbindung zum Außenraum A des geschützten Innenraums 9 ausbilden, sodass vorteilhaft beispielsweise Elektrik dem Profilkörper 24, insbesondere der Stator-Anordnung 5, zu- bzw. abgeführt wird. Die beiden Füße 27 dienen vorteilhaft dazu, dass durch die Stator-Anordnung 5 produzierte Abwärme abgeführt wird. Somit wird eine Überhitzung der Vorrichtung 1 vermieden. Über den Fuß 24 können beispielsweise Anschlussleitungen der Stator-Anordnung 5 in den Außenraum A geführt sein.

Bei einem weiteren Ausführungsbeispiel ist der Profilkörper 24 nur durch einen Fuß 27 oder durch mehr als zwei Füße 27 abgestützt.

Die Erfindung schlägt somit allgemein eine Vorrichtung 1 zur Manipulation eines Gegenstandes 3 vor, wobei der Gegenstand 3 von wenigstens einem Mover 4, der magnetisch an einer Stator-Anordnung 5 angekoppelt ist, berührungslos auf einer Antriebsfläche 7 bewegbar ist, wobei die Antriebsfläche 7 als Begrenzungswand 8 eines geschützten Innenraums 9 ausgebildet ist. Die Verwendung einer solchen flexiblen Vorrichtung 1 ist vorzugsweise in der Lebensmittelindustrie oder pharmazeutischen Industrie von Interesse, jedoch nicht auf diese Bereiche beschränkt.

### Bezugszeichenliste

- 1: Vorrichtung
- 2: Gehäuse
- 3: Gegenstand
- 4: Mover
- 5: Stator-Anordnung
- 6: Aufnahme
- 7: Antriebsfläche
- 8: Begrenzungswand
- 9: geschützter Innenraum
- 10: Kopplungsbereich
- 11: Trennschicht
- 12: Trägerkomponenten
- 13: Rack
- 14: Befülleinrichtung
- 15: Prozessstation
- 16: (erste) Kammer
- 17: Zwischenwand
- 18: Zugangsöffnung
- 19: Umhüllung
- 20: Verankerung
- 21: Zone
- 22: Tunnel
- 23: (zweite) Kammer
- 24: Profilkörper
- 25: Zugang
- 26: Justiereinrichtung
- 27: Fuß von 24
- 28: Innenprofil
- 29: Außenprofil
- 30: Dichtelement
- A: Außenraum

## Patentansprüche

1. Vorrichtung (1) zur Manipulation eines Gegenstandes (3), wobei der Gegenstand (3) von wenigstens einem Mover (4), der magnetisch an eine Stator-Anordnung (5) angekoppelt ist, berührungslos auf einer Antriebsfläche (7) bewegbar ist, wobei die Antriebsfläche (7) als dichte Begrenzung, insbesondere als Begrenzungswand (8), eines geschützten Innenraums (9) ausgebildet ist, wobei ein Kopplungsbereich (10) der Stator-Anordnung (5) aus einer magnetisch neutralen Trennschicht (11) gefertigt ist und wobei sich zumindest eine Prozessstation (15) fest montiert oder auf dem Mover (4) im geschützten Innenraum (9) befindet.

2. Vorrichtung (1) nach Anspruch 1, **dadurch gekennzeichnet, dass** die Stator-Anordnung (5) außerhalb eines geschützten Innenraums (9) angeordnet ist, insbesondere an einer vorzugsweise vertikalen und/oder horizontalen und/oder schrägen Begrenzungswand (8) angeordnet ist, und/oder dass der wenigstens eine Mover (4) im geschützten Innenraum (9) oder außerhalb des geschützten Innenraums (9) angeordnet ist.

3. Vorrichtung (1) nach einem der vorangegangenen Ansprüche, **dadurch gekennzeichnet, dass** die Begrenzungswand (8) des geschützten Innenraums (9) einen Kopplungsbereich (10) aus der Stator-Anordnung (5) und dem wenigstens einen Mover (4) hat, insbesondere wobei die Fläche innerhalb des Kopplungsbereiches (10) kleiner als die Fläche der Begrenzungswand (8) sein kann.

4. Vorrichtung (1) nach einem der vorangegangenen Ansprüche, **dadurch gekennzeichnet, dass** die Begrenzungswand (8) aus der magnetisch neutralen Trennschicht (11), insbesondere aus einer Edelstahl- und/oder Glasschicht und/oder aus gasdichtem Kunststoff und/oder aus Verbundwerkstoff gefertigt ist, die vorzugsweise weniger als 2 mm stark ist, und/oder dass die Begrenzungswand (8) und/oder der oder ein Kopplungsbereich (10) durch Trägerkomponenten (12), vorzugsweise aus magnetisch neutralen Materialen bestehend, stabilisiert ist.

5. Vorrichtung (1) nach einem der vorangegangenen Ansprüche, **dadurch gekennzeichnet, dass** die Stator-Anordnung (5) in wenigstens einem Rack (13) aufgebaut ist, wobei das wenigstens eine Rack (13) direkt an der Begrenzungswand (8) und/oder dem oder einem Kopplungsbereich (10) angelagert ist, und/oder von und zum Einsatzort bewegbar ist und/oder am Einsatzort zwischen einer der Begrenzungswand (8) angenäherten Arbeitsposition und einer von der Begrenzungswand (8) entfernten Position verstellbar ist.

6. Vorrichtung (1) nach einem der vorangegangenen Ansprüche, **dadurch gekennzeichnet, dass** die oder eine Begrenzungswand (8) und/oder die oder eine Trennschicht (11) von der Vorrichtung (1) abnehmbar sind.

7. Vorrichtung (1) nach einem der vorangegangenen Ansprüche, **dadurch gekennzeichnet, dass** der geschützte Innenraum (9) mindestens zwei Kammern (16, 23) hat, insbesondere wobei die mindestens zwei Kammern (16, 23) durch eine Zwischenwand (17) gebildet sind, die vorzugsweise mindestens eine kleine Zugangsöffnung (18) aufweist und/oder vorzugsweise die Begrenzungswand (8) ausbildet.

8. Vorrichtung (1) nach einem der vorangegangenen Ansprüche, **dadurch gekennzeichnet, dass** sich die zumindest eine Prozessstation (15), beispielsweise eine Befülleinrichtung (14), in dem oder einem Kopplungsbereich(10) und/oder in einer Kammer (16) angeordnet und in einer zweiten Kammer (23) befestigt befindet.

9. Vorrichtung (1) nach einem der Ansprüche 7 oder 8, **dadurch gekennzeichnet, dass** die Stator-Anordnung (5) an mindestens einer Begrenzungswand (8) und/oder mindestens einem Kopplungsbereich (10) und/oder zwei benachbarten Wänden des geschützten Innenraums (9) so angeordnet ist, dass der mindestens eine Mover (4) den mindestens einen Gegenstand (3) innerhalb der mindestens zwei Kammern (16, 23) und/oder durch die mindestens eine kleine Zugangsöffnung (18) der Zwischenwand (17) zwischen den mindestens zwei Kammern (16, 23) transportieren kann.

10. Vorrichtung (1) nach einem der Ansprüche 7 bis 9, **dadurch gekennzeichnet, dass** die Stator-Anordnung (5) innerhalb der mindestens einen Zwischenwand (17) zwischen den mindestens zwei Kammern (16, 23) vorzugsweise vertikal angeordnet ist.

11. Vorrichtung (1) nach den Ansprüchen 7 bis 10 **dadurch gekennzeichnet, dass** die Stator-Anordnung (5) in der mindestens einen Zwischenwand (17) in wenigstens einem Rack (13) aufgebaut ist.

12. Vorrichtung (1) nach einem der vorangegangenen Ansprüche, **dadurch gekennzeichnet, dass** der geschützte Innenraum (9) wenigstens eine durchströmte Zone (21) aufweist, insbesondere wobei die Antriebsfläche (7) so ausgerichtet ist, dass der wenigstens eine Mover (4) in die Zone (21) und/oder in der Zone (21) verfahrbar ist.

13. Vorrichtung (1) nach einem der vorangegangenen Ansprüche, **dadurch gekennzeichnet, dass** die Stator-Anordnung (5) von einem gegenüber dem Innenraum (9) dichten Tunnel (22) umhüllt ist, wobei die Antriebsfläche (7) durch eine Umhüllung (19) des Tunnels (22) ausgebildet ist oder wobei die Antriebsfläche (7) innerhalb des geschützten Innenraums (9) unabhängig von der Umhüllung (19) ausgebildet ist.

14. Vorrichtung (1) nach Anspruch 13, **dadurch gekennzeichnet, dass** der Tunnel (22) einseitig oder zweiseitig von außerhalb des geschützten Innenraums (9) zugänglich ist und/oder dass der Tunnel (22) entlang eines vollen um seine Längsausstreckung verlaufenden Umfangs vom geschützten Innenraum (9) umgeben ist.

15. Vorrichtung (1) nach einem der vorangegangenen Ansprüche, **dadurch gekennzeichnet, dass** der geschützte Innenraum (9) einen Profilkörper (24) aufweist, wobei der Profilkörper (24) die Stator-Anordnung (5) und die Trennschicht (11) aufweist, insbesondere wobei die vorzugsweise folienartige Trennschicht (11) vorzugsweise austauschbar an dem Profilkörper (24) befestigt ist.

16. Vorrichtung (1) nach einem der Ansprüche 13 bis 15, **dadurch gekennzeichnet, dass** der Tunnel (22) und/oder der Profilkörper (24) Zugänge (25) außerhalb des geschützten Innenraums (9) ausbildet/ ausbilden.

17. Verfahren zum Befüllen mindestens eines Gegenstands (3) mit einer Vorrichtung nach einem der vorangegangenen Ansprüche, **dadurch gekennzeichnet, dass** der mindestens eine Gegenstand (3) von einem Mover (4) auf einer Antriebsfläche (7) des geschützten Innenraums (9) zu einer Prozessstation (15), beispielsweise einer Befülleinrichtung (14) bewegt und durch die Befülleinrichtung (14) befüllt wird, wobei die Befülleinrichtung (14) im geschützten Innenraum, insbesondere auf der Antriebsfläche (7) positioniert oder auf einem weiteren Mover (4) positioniert ist.

18. Verwendung einer Begrenzungswand (8) eines geschützten Innenraums (9) einer Vorrichtung (1) nach einem der Ansprüche 1 bis 16 als Antriebsfläche (7) wenigstens eines Movers (4), der an eine Stator-Anordnung (5) angekoppelt ist.

## Claims

1. Device (1) for manipulating an object (3), wherein the object (3) can be moved in a contactless manner on a drive surface (7) by at least one mover (4) which is magnetically coupled to a stator assembly (5), wherein the drive surface (7) is designed as a tight boundary, in particular as a boundary wall (8), of a protected interior space (9), wherein a coupling region (10) of the stator assembly (5) is produced from a magnetically neutral separating layer (11) and wherein at least one process station (15) is located in a fixedly mounted manner or on the mover (4) in the protected interior space (9).

2. Device (1) according to claim 1, **characterized in that** the stator assembly (5) is arranged outside a protected interior space (9), in particular is arranged on a preferably vertical and/or horizontal and/or sloping boundary wall (8), and/or **in that** the at least one mover (4) is arranged in the protected interior space (9) or outside the protected interior space (9).

3. Device (1) according to one of the preceding claims, **characterized in that** the boundary wall (8) of the protected interior space (9) has a coupling region (10) of the stator assembly (5) and the at least one mover (4), in particular wherein the area within the coupling region (10) may be smaller than the area of the boundary wall (8).

4. Device (1) according to one of the preceding claims, **characterized in that** the boundary wall (8) is made from the magnetically neutral separating layer (11), in particular from a stainless steel and/or glass layer and/or from gas-tight plastic and/or from composite material, which is preferably less than 2 mm thick, and/or **in that** the boundary wall (8) and/or the or a coupling region (10) is stabilized by carrier components (12), preferably consisting of magnetically neutral materials.

5. Device (1) according to one of the preceding claims, **characterized in that** the stator assembly (5) is set up in at least one rack (13), wherein the at least one rack (13) is directly mounted on the boundary wall (8) and/or the or a coupling region (10), and/or is movable from and to the site of use and/or is adjustable at the site of use between an operating position approximated to the boundary wall (8) and a position remote from the boundary wall (8).

6. Device (1) according to one of the preceding claims, **characterized in that** the or a boundary wall (8) and/or the or a separating layer (11) can be removed from the device (1).

7. Device (1) according to one of the preceding claims, **characterized in that** the protected interior space (9) has at least two chambers (16, 23), in particular wherein the at least two chambers (16, 23) are formed by a partition wall (17) which preferably has at least one small access opening (18) and/or preferably forms the boundary wall (8).

8. Device (1) according to one of the preceding claims, **characterized in that** the at least one process station (15), for example a filling device (14), is arranged in the or a coupling region (10) and/or in a chamber (16) and is located in a fastened manner in a second chamber (23).

9. Device (1) according to one of claims 7 or 8, **characterized in that** the stator assembly (5) is arranged on at least one boundary wall (8) and/or at least one coupling region (10) and/or two adjacent walls of the protected interior space (9) in such a way that the at least one mover (4) can transport the at least one object (3) within the at least two chambers (16, 23) and/or through the at least one small access opening (18) of the intermediate wall (17) between the at least two chambers (16, 23).

10. Device (1) according to one of claims 7 to 9, **characterized in that** the stator assembly (5) is arranged preferably vertically within the at least one intermediate wall (17) between the at least two chambers (16, 23).

11. Device (1) according to claims 7 to 10, **characterized in that** the stator assembly (5) is set up in the at least one intermediate wall (17) in at least one rack (13).

12. Device (1) according to one of the preceding claims, **characterized in that** the protected interior space (9) has at least one zone (21) through which flow occurs, in particular wherein the drive surface (7) is aligned such that the at least one mover (4) can be moved into the zone (21) and/or in the zone (21).

13. Device (1) according to one of the preceding claims, **characterized in that** the stator assembly (5) is enclosed by a tunnel (22) that is sealed with respect to the interior space (9), wherein the drive surface (7) is formed by an enclosure (19) of the tunnel (22) or wherein the drive surface (7) is formed within the protected interior space (9) ) independently of the enclosure (19).

14. Device (1) according to claim 13, **characterized in that** the tunnel (22) is accessible from outside the protected interior space (9) on one or two sides and/or **in that** the tunnel (22) is surrounded by the protected interior space (9) along a full circumference running around its longitudinal extension.

15. Device (1) according to one of the preceding claims, **characterized in that** the protected interior space (9) has a profile body (24), wherein the profile body (24) has the stator assembly (5) and the separating layer (11), in particular wherein the preferably film-like separating layer (11) is preferably interchangeably attached to the profile body (24).

16. Device (1) according to one of claims 13 to 15, **characterized in that** the tunnel (22) and/or the profile body (24) forms/form accesses (25) outside the protected interior space (9).

17. Method for filling at least one object (3) with a device according to one of the preceding claims, **characterized in that** the at least one object (3) is moved by a mover (4) on a drive surface (7) of the protected interior space (9) to a process station (15), for example a filling device (14), and is filled by the filling device (14), wherein the filling device (14) is positioned in the protected interior space, in particular on the drive surface (7), or is positioned on a further mover (4).

18. Use of a boundary wall (8) of a protected interior space (9) of a device (1) according to one of claims 1 to 16 as a drive surface (7) of at least one mover (4) which is coupled to a stator assembly (5).

## Revendications

1. Dispositif (1) pour la manipulation d'un objet (3), dans lequel l'objet (3) peut être déplacé sans contact sur une surface d'entraînement (7) par au moins un manipulateur (4) en couplage magnétique avec un dispositif de stator (5), dans lequel la surface d'entraînement (7) est conçue comme une délimitation étanche, en particulier comme une paroi de délimitation (8), d'un espace intérieur protégé (9), dans lequel une zone de couplage (10) du dispositif de stator (5) est fabriquée à partir d'une couche de séparation magnétiquement neutre (11) et dans lequel au moins un poste de traitement (15) est monté fixe ou sur le manipulateur (4) dans l'espace intérieur protégé (9).

2. Dispositif (1) selon la revendication 1, **caractérisé en ce que** le dispositif de stator (5) est disposé à l'extérieur d'un espace intérieur protégé (9), en particulier sur une paroi de délimitation (8) de préférence verticale et/ou horizontale et/ou oblique, et/ou **en ce que** l'au moins un manipulateur (4) est disposé dans l'espace intérieur protégé (9) ou à l'extérieur de l'espace intérieur protégé (9).

3. Dispositif (1) selon l'une des revendications précédentes, **caractérisé en ce que** la paroi de délimitation (8) de l'espace intérieur protégé (9) possède une zone de couplage (10) formée du dispositif de stator (5) et de l'au moins un manipulateur (4), l'aire à l'intérieur de la zone de couplage (10) pouvant en particulier être plus petite que l'aire de la paroi de délimitation (8).

4. Dispositif (1) selon l'une des revendications précédentes, **caractérisé en ce que** la paroi de délimitation (8) est fabriquée à partir de la couche de séparation magnétiquement neutre (11), en particulier à partir d'une couche d'acier inoxydable et/ou de verre et/ou d'un matériau de synthèse imperméable au gaz et/ou d'un matériau composite, dont l'épaisseur est de préférence inférieure à 2 mm, et/ou **en ce que** la paroi de délimitation (8) et/ou la ou une zone de couplage (10) sont stabilisées par des composants portants (12), faits de préférence de matériau magnétiquement neutre.

5. Dispositif (1) selon l'une des revendications précédentes, **caractérisé en ce que** le dispositif de stator (5) est monté dans au moins un châssis (13), l'au moins un châssis (13) étant supporté directement sur la paroi de délimitation (8) et/ou la ou une zone de couplage (10), et/ou pouvant être déplacé vers et à partir du lieu d'utilisation et/ou pouvant être déplacé sur le lieu d'utilisation entre une position de travail rapprochée de la paroi de délimitation (8) et une position éloignée de la paroi de délimitation (8).

6. Dispositif (1) selon l'une des revendications précédentes, **caractérisé en ce que** la ou une paroi de délimitation (8) et/ou la ou une couche de séparation (11) peuvent être enlevées du dispositif (1).

7. Dispositif (1) selon l'une des revendications précédentes, **caractérisé en ce que** l'espace intérieur protégé (9) possède au moins deux chambres (16, 23), les au moins deux chambres (16, 23) étant en particulier formées par une cloison (17) qui présente de préférence une petite ouverture d'accès (18) et/ou qui forme de préférence la paroi de délimitation (8).

8. Dispositif (1) selon l'une des revendications précédentes, **caractérisé en ce que** l'au moins un poste de traitement (15), par exemple une installation de remplissage (14), est disposé dans la ou une zone de couplage (10) et/ou dans une chambre (16) et se trouve fixé dans une deuxième chambre (23).

9. Dispositif (1) selon l'une des revendications 7 ou 8, **caractérisé en ce que** le dispositif de stator (5) est disposé sur au moins une paroi de délimitation (8) et/ou au moins une zone de couplage (10) et/ou deux parois voisines de l'espace intérieur protégé (9), de telle façon que l'au moins un manipulateur (4) puisse transporter l'au moins un objet (3) à l'intérieur des au moins deux chambres (16, 23) et/ou à travers l'au moins une petite ouverture d'accès (18) de la cloison (17) entre les au moins deux chambres (16, 23).

10. Dispositif (1) selon l'une des revendications 7 à 9, **caractérisé en ce que** le dispositif de stator (5) est disposé de préférence verticalement à l'intérieur de l'au moins une cloison (17) entre les au moins deux chambres (16, 23).

11. Dispositif (1) selon les revendications 7 à 10, **caractérisé en ce que** le dispositif de stator (5) est monté dans l'au moins une cloison (17) dans au moins un châssis (13).

12. Dispositif (1) selon l'une des revendications précédentes, **caractérisé en ce que** l'espace intérieur protégé (9) comporte au moins une zone parcourue par un flux (21), la surface d'entraînement (7) étant en particulier orientée de telle façon que l'au moins un manipulateur (4) puisse être déplacé dans la zone (21) et/ou à l'intérieur de la zone (21).

13. Dispositif (1) selon l'une des revendications précédentes, **caractérisé en ce que** le dispositif de stator (5) est entouré par un tunnel (22) hermétique par rapport à l'espace intérieur (9), la surface d'entraînement (7) étant formée par une enveloppe (19) du tunnel (22) et la surface d'entraînement (7) étant formée à l'intérieur de l'espace intérieur protégé (9) indépendamment de l'enveloppe (19).

14. Dispositif (1) selon la revendication 13, **caractérisé en ce que** le tunnel (22) est accessible d'un côté ou des deux côtés par l'extérieur de l'espace intérieur protégé (9) et/ou **en ce que** le tunnel (22) est entouré par l'espace intérieur protégé (9) le long de toute une circonférence qui s'étend dans le sens de la longueur.

15. Dispositif (1) selon l'une des revendications précédentes, **caractérisé en ce que** l'espace intérieur protégé (9) comporte un corps profilé (24), lequel corps profilé (24) comporte le dispositif de stator (5) et la couche de séparation (11), la couche de séparation (11), de préférence en forme de film, étant de préférence fixée de façon interchangeable sur le corps profilé (24).

16. Dispositif (1) selon l'une des revendications 13 à 15, **caractérisé en ce que** le tunnel (22) et/ou le corps profilé (24) forment des accès (25) à l'extérieur de l'espace intérieur protégé (9).

17. Procédé pour le remplissage d'au moins un objet (3) avec un dispositif selon l'une des revendications précédentes, **caractérisé en ce que** l'au moins un objet (3) est déplacé par un manipulateur (4) sur une surface d'entraînement (7) de l'espace intérieur protégé (9) vers un poste de traitement (15), de préférence une installation de remplissage (14), et déplacé à travers l'installation de remplissage (14), laquelle installation de remplissage (14) est positionnée dans l'espace intérieur protégé, en particulier sur la surface d'entraînement (7) ou sur un autre manipulateur (4).

18. Utilisation d'une paroi de délimitation (8) d'un espace intérieur protégé (9) d'un dispositif (1) selon l'une des revendications 1 à 16 comme surface d'entraînement (7) d'au moins un manipulateur (4) qui est couplé à un dispositif de stator (5).
